# EUROPEAN PATENT APPLICATION

(11) **EP 1 574 418 A1**
(43) Date of publication of application: **14.09.2005**
(21) Application number: 05251215.9
(22) Date of filing: 01.03.2005
(51) Int. Cl.: B62D 5/30, B62D 5/32

(54) **Power steering system for a vehicle**

(30) Priority: 11.03.2004 JP 2004069737
(71) Applicant: Isuzu Motors Limited, Tokyo (JP)
(72) Inventor: Okada, Kengo, Fujisawa-shi Kanagawa (JP); Watanabe, Yukitoshi, Fujisawa-shi Kanagawa (JP); Mabuchi, Yoshimasa, Fujisawa-shi Kanagawa (JP)
(74) Representative: Turner, James Arthur

(57) **Abstract**

A power steering system to prevent a sub-pump from being unnecessarily operative in a normal operating state, and to effect steering assist when an engine stops. When a main pump (142) is operative in a normal state, oil in an oil tank (141) is supplied to a pump switching valve (121) in a power steering unit via a main feed passage (16a), and a front-wheel power cylinder (123) and a rear-wheel power cylinder (13) effect steering assist for wheels by use of the oil from the main pump. In case an abnormal operation occurs on the main pump (141) or an oil pressure decreases due to an damage on the main feed passage (16a) and the like, a pressure detecting switch (143) detects it and sends an On-signal to a drive control unit (146). The drive control unit (146) that receives the On-signal then supplies a battery voltage to the sub-pump (145) to drive the sub-pump (145). The oil in the oil tank (144) is supplied to the pump switching valve (121) in the power steering unit (12) via a sub-feed passage (16c), and the power cylinder (13,123) is activated to effect steering assist for the wheels.

## Description

The present invention relates to a power steering system for a vehicle.

In a power steering system for a vehicle, steering assist for a steering wheel is in general effected by use of an oil pressure. Specifically, a power cylinder is supplied with oil in an oil tank by use of a main pump that is engine driven, and is then activated by use of the oil pressure to assist steering of the vehicle.

However, in case supplying of the oil stops due to a breakdown on the main pump, a damage on an oil feed pipe and the like, the oil pressure cannot be transmitted to the power cylinder if an arrangement comprises only one main pump. As a countermeasure for this problem, there is provided a power steering system in which a sub-pump is provided which employs a mechanical rotational force generated by an axle and the like as a drive source other than engines, and which is used to make an oil supply when the main pump fails to operate properly. (Japanese Patent Application Laid-open No. 2001-39328)

This power steering system is arranged in such a form that when the main pump is operative in a normal state, a shortcut is used for an oil feed passage and an oil return passage for the sub-pump so as to interrupt the oil supply therefrom to the power cylinder, and only when the main pump is abnormal in operation, the shortcut is relieved for the oil passages as mentioned above and thus the power cylinder is supplied with the oil from the sub-pump.

The followings are the patent literatures to be referred.

Patent Literature No. 1 "Japanese Patent Application Laid-open No. 2001-39328"

Patent Literature No. 2 "Japanese Patent Application Laid-open No. 2000-289632"

However, in the power steering system in which the sub-pump is applied as disclosed in the Patent Application Laid-open No. 2000-289632 and the like, the sub-pump is constantly operative even when the oil supply from the sub-pump is not necessary. Hence, the oil is unnecessarily circulating in the power steering system, causing unfavorable fuel consumption.

Moreover, as the sub-pump cannot be activated unless a vehicle is in a driving mode, there has been a problem that when the engine stops due to a breakdown, it becomes impossible for one to move the vehicle to a breakdown lane as the steering assist does not work, even though he/she tries to move it.

The present invention has been made in view of the above, and embodiments of the present invention can provide a power steering system that prevents the sub-pump from being unnecessarily operative when the main pump is normal in operation, and that makes it possible to effect the steering assist even when the engine stops.

Various respective aspects and features of the invention are defined in the appended claims. Features from the dependent claims may be combined with features of the independent claims as appropriate and not merely as explicitly set out in the claims.

In embodiments of the invention, a steering assist system is supplied with oil in an oil tank by use of a main pump that is engine driven and thus steering assist for a steering wheel is effected by use of the oil supplied.

According to the present invention, there is provided a power steering system for a vehicle in which a steering assist system is supplied with oil in an oil tank by use of a main pump that is engine driven and steering assist for a steering wheel of the vehicle is effected by use of the oil supplied, involves a sub-pump that supplies the steering assist system with the oil in the oil tank by use of a battery drive, abnormality detector for detecting an abnormality occurring in an oil supply made by use of the main pump, and sub-pump drive control part for activating the sub-pump only when the abnormality detector detects the abnormality in the oil supply by the main pump.

In the arrangement as described above, when the main pump is in a normal state, the oil supply is performed by the main pump. In the meantime, as the sub-pump is not in an operational mode, the oil does not circulate on the sub-pump side. However, once the abnormality detector detects an abnormality in the oil supply by the main pump, the sub-pump drive control part activates the sub-pump that is battery driven. That, in consequence, makes it possible to prevent the sub-pump from being unnecessarily operative when the main pump is normal in operation. Moreover, as the sub-pump is battery driven, it becomes possible to effect the steering assist even when the engine stops. Therefore, in case the vehicle is in a breakdown and is required to move in a proper manner (for example, to push for moving the vehicle by hand), it becomes possible for one to maneuver the steering wheel of the vehicle without difficulty to move it to a desired direction.

Furthermore, if the abnormality detector is arranged in such a form that it detects an abnormality on the basis of the oil pressure generated by the supplied oil or an amount of oil flow of the supplied oil, it becomes possible to detect not only the abnormality on the main pump but also troubles due to an engine stop and a damage on a feeding pipe.

Alternatively, if the abnormality detector is arranged to detect an abnormality on the basis of an amount of oil in the oil tank, it becomes possible to detect not only the abnormality on the main pump but also the damage on the feed pipe.

The invention will now be described by way of example with reference to the accompanying drawings, throughout which like parts are referred to by like references, and in which:

In the accompanying drawings:
Fig. 1 is a schematic side view of a vehicle on which a power steering system according to an embodiment of the present invention is mounted;
Fig. 2 is a schematic view of the power steering system in Fig. 1; and
Fig. 3 is a schematic view of a modified example of the power steering system shown in Fig. 2.

The present embodiment makes it possible to prevent the sub-pump from being unnecessarily operative when the main pump is normal in operation. Moreover, as the sub-pump is battery driven, it is also possible to effect the steering assist even when the engine stops.

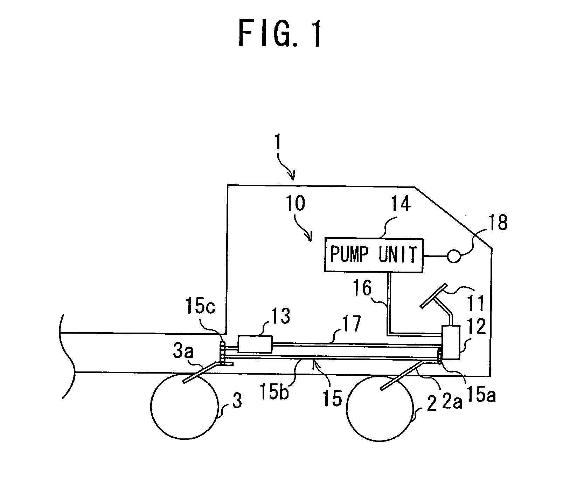

Fig. 1 is a schematic side view of a vehicle on which a power steering system according to an embodiment of the present invention is mounted. A vehicle 1 is one such as a tractor which tows a trailer, an auto-truck and the like, and is provided with a power steering system 10 to be mounted at the front of the vehicle. The power steering system 10 mainly comprises a steering wheel 11, a power steering unit 12, a power cylinder 13, and a pump unit 14, and controls steering for front wheels 2 consisting of a pair of wheels provided respectively at the left and right of and at the front of the vehicle and for rear wheels 3 consisting of a pair of wheels provided respectively at the left and right of and at the rear of the vehicle.

Power produced through maneuvering of the steering wheel 11 is transmitted to a drag link 2a provided at the front wheels 2 via the power steering unit 12 and an arm 15a for a link mechanism 15. The wheels 2 are thereby steered to a left or right direction. The power thus transmitted to the arm 15a is further transmitted to a driven arm 15c provided at the rear of the vehicle via a connecting rod 15b. A movement in the driven arm 15c, which results from the power thus transmitted, is transmitted to a drag link 3a at the rear wheels 3, and the rear wheels 3 are accordingly steered to a left or right direction.

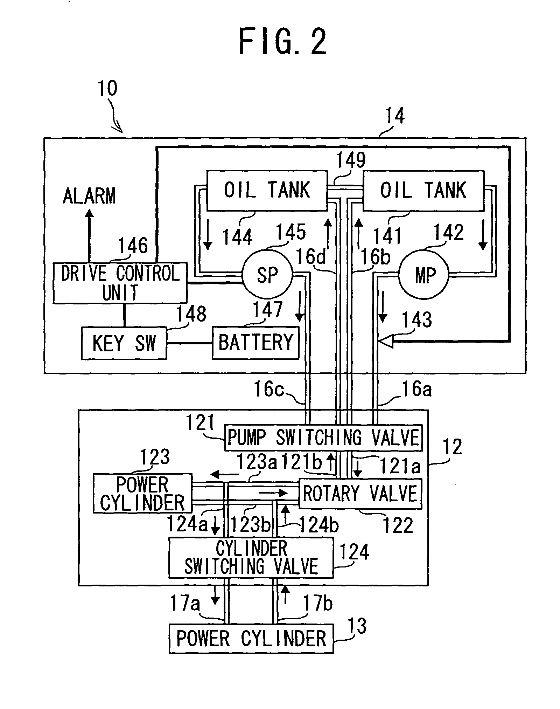

The power steering unit 12 that serves as a steering-assist mechanism is linked to the pump unit 14 via a feed pipe 16. There are mounted on the pump unit 14 as shown in Fig. 2 a main pump (referred to as MP in the drawing) 142, a sub-pump (referred to as SP in the drawing) 145, and the like, that supply the power steering unit 12 with the oil in an oil tank as needed. By making use of the oil thus supplied, the power steering unit 12 assists steering of the front wheels 2.

Likewise, the power steering unit 12 is also linked to the power cylinder 13 provided at the rear of the vehicle via a feed pipe 17. The power cylinder 13 which serves as a steering-assist mechanism receives the oil supplied through the feed pipe 17, and thereby assists steering of the rear wheels 3.

A warning lamp 18 is further installed in the vehicle 1 so that when an abnormality occurs on the main pump 142, it lights to alert passengers.

Then, a particular arrangement for the power steering system 10 will be described hereinbelow.

Fig. 2 is a schematic view of a particular arrangement for the power steering system 10. The pump unit 14 is provided with an oil tank 141 and the main pump 142 as a main circuit. The main pump 142 is disposed in the middle of a main feed passage 16a of the feed pump 16. This main pump 142 is of an engine driven type, that pumps up oil in the oil tank 141 and supplies it to the power steering unit 12. At this time, return oil returned from the power steering unit 12 is fed back to the oil tank 141 via a main return passage 16b.

In the middle of the main feed passage 16a, a pressure detecting switch 143 is also provided. The pressure detecting switch 143 detects a pressure of the oil, and outputs an On-signal when the value of the pressure thus detected becomes equal to or lower than a predetermined value. The output On-signal is then sent to a drive control unit 146 which will be described hereinbelow.

Incidentally, the pressure detecting switch 143 can be replaced by a flow-amount detecting switch that detects the amount of oil flow and outputs an On-signal when the amount of oil flow becomes equal to or lower than a predetermined one.

Furthermore, an oil tank 144, a sub-pump 145, and the drive control unit 146 are provided in the pump unit 14 as a sub-circuit. The oil tank 144 communicates with the other oil tank 141 via a communication pipe 149. The pressures in the both tanks are thereby maintained at the same pressure.

The sub-pump 145 is provided in the middle of a sub-feed passage 16c of the feed pipe 16. This sub-pump 145 is driven by use of a battery 147 and as will be described hereinbelow, when an operational trouble occurs on the main circuit, the sub-pump 145 pumps up the oil in the oil tank 144 and supplies it to the power steering unit 12. At this time, return oil returned from the power steering unit 12 is fed back to the oil tank 144 via a sub-return passage 16d.

The drive control unit 146 comprises, for example, a relay switch and the like, and is linked to the battery 147 via a key switch (referred to as a key SW in the drawing) 148. This drive control unit 146 once receives an On-signal from the above-described pressure detecting switch 143 while the key switch 148 is in an on-mode, and supplies the sub-pump 145 with a battery voltage so as to drive the sub-pump 145. At the same time, the drive control unit 146 causes the warning lamp 18 of FIG. 1 to be turned on.

The battery 147 is linked to an alternator (not illustrated), and is constantly charged when the engine is in a driving mode.

In the power steering unit 12, there are formed in one housing a pump switching valve 121, a rotary valve 122, a power cylinder 123, and a cylinder switching valve 124.

The pump switching valve 121 is linked to each of the passages 16a to 16d of the feed pipe 16. This pump switching valve 121 involves, for example, a spool energized by a spring (not illustrated), and is arranged to balance an oil pressure generated by the oil from the main pump 142 as a pilot pressure, with a spring pressure generated by the spring. When the main pump 142 is operative in a normal state, the spool is subjected to the pilot pressure and moved into a neutral position while resisting the spring pressure, which causes the main feed passage 16a to communicate with a feed passage 121 a that has been communicating with the rotary valve 122, and in a similar manner, which causes the main return passage 16b to communicate with the return passage 121 b. The main pump 142 is thereby set into an oil supply mode.

On the one hand, in case an abnormality occurs on the main pump 142 and in consequence the pilot pressure decreases, the spool is pressed and moved by the spring. At this time, the feed passage 16c on the sub-pump 145 is caused to communicate with the feed passage 121a, and in a similar manner, the return passage 16d is caused to communicate with the return passage 121 b. Therefore, the sub-pump 145 is set into an oil supply mode.

The rotary valve 122 communicates with the power cylinder 123 via passages 123a and 123b and also communicates with the cylinder switching valve 124 via passages 124a and 124b. The rotary valve 122 is mechanically linked to the steering wheel 11 and effects switching of the oil passages for the oil to the power cylinder 123 in response to a rotational direction of the steering wheel 11. That is, when the passage 123a serves as a feed passage, the passage 123b is caused to work as a return passage. The direction of the passage is thus caused to be switched into the reversed direction if the steering is switched into the reversed direction.

Likewise, the rotary valve 122 also effects switching of the passages to the cylinder switching valve 124 in a similar manner to that as described above. That is, when the passage 124a works as a feed passage, the passage 124b is caused to work as a return passage. The direction of the passage is thus caused to be switched into the reversed direction if the steering is switched into the reversed direction.

The power cylinder 123 operates in response to switching of the oil passage by the rotary valve 122, thereby effecting steering assist for the front wheels 2 in response to a rotational direction of the steering wheel 11 to be rotated in a clockwise direction or in a counterclockwise direction.

The cylinder switching valve 124 takes an arrangement similar to that for the pump switching valve 121. That is, an oil pressure generated by the oil from the main pump 142 is transmitted to the cylinder switching valve 124 as a pilot pressure via a feed passage (not illustrated), and when the pilot pressure is normal, the cylinder switching valve 124 supplies the oil to the power cylinder 13 provided at the rear of the vehicle via each of feed passages 17a and 17b in the feed pipe 17. And when the pilot pressure decreases, the cylinder switching valve 124 stops supplying the oil to the power cylinder 13.

When the main circuit 13 is operative in a normal state, the power cylinder 13 operates in response to switching of the oil passages by the rotary valve 122, thereby effecting steering assist for the rear wheels 3 in response to a rotational direction of the steering wheel 11 to be rotated in a clockwise direction or in a counterclockwise direction.

Incidentally, although the embodiment is described in Fig. 2 in which the cylinder switching valve 124 is formed in one unit with the power cylinder 123 and the like for the power steering unit 12, it can be formed as an independent unit.

Operations for the power steering system 10 in the present embodiment mode as the arrangement described above will be described hereinbelow with reference to Fig. 2.

When the main pump 142 is normal in operation, the oil in the oil tank 141 is supplied to the pump switching valve 121 provided in the power steering unit 12 via the main feed passage 16a. At this time, as the pilot pressure to which the pump switching valve 121 is subjected is normal, the pump switching valve 121 causes the main feed passage 16a and the main return passage 16b to communicate with the rotary valve 122.

Hence, the power cylinder 123 effects the steering assist for the front wheels 2 as described above by use of the oil from the main pump 142. As the pilot pressure to the cylinder switching valve 124 is also normal, the cylinder switching valve 124 supplies the power cylinder 13 with the oil from the rotary valve 122. Hence, the power cylinder 13 effects the steering assist for the rear wheels 3.

In the meantime, in case the main pump 142 becomes abnormal in operation or the oil pressure decreases due to an damage on the main feed passage 16a and the like, the pressure detecting switch 143 detects it and sends an On-signal to the drive control unit 146. The drive control unit 146 which received this On-signal supplies a battery voltage to the sub-pump 145 to drive the sub-pump 145. Once the sub-pump 145 is activated, the oil in the oil tank 144 is supplied to the pump switching valve 121 in the power steering unit 12 via the sub-feed passage 16c.

In the pump switching valve 121, as the pilot pressure has already decreased due to the abnormality occurring on the main pump 142, the communication with the rotary valve 122 is switched to the sub-feed passage 16c and the sub-return passage 16d. The power steering unit 12 is thus supplied with the oil from the sub-pump 145.

Therefore, the oil from the sub-pump 145 causes the power cylinder 123 to be activated, hence effecting the steering assist for the front wheels 2.

Incidentally, at this time as the pilot pressure in the cylinder switching valve 124 has also already decreased, the cylinder switching valve 124 cuts off the oil supply to the power cylinder 13. Thus, this stops steering assist to the rear wheels 3.

As described above, in the power steering system 10 in the present embodiment, the arrangement takes such a form that the sub-pump 145 is activated by the battery 147 when an abnormality occurs on the main pump 142, so that it is made possible to cause the sub-pump 145 to be inoperative when the main pump 142 operates in a normal state. Therefore, it is made possible to avoid an unnecessary circulation of the oil, hence eliminating the wasting of the oil to be supplied and reducing a waste of energy.

Incidentally, it becomes possible to drive the sub-pump 145 by use of the battery 147 so long as the key switch 148 is in an operational mode, hence making it possible to effect the steering assist even while the engine is inoperative. Therefore, in case the vehicle is in a breakdown and is pushed for moving by hand, it becomes possible for one to maneuver a steering wheel of the vehicle with ease to move it to a desired direction.

While the embodiment is described in which the present invention is applied to the steering control for the tractor having pairs of wheels which are respectively disposed at the front and rear of the vehicle front body, the present invention is also applicable to a four wheel drive vehicle. Furthermore, it is also applicable to an ordinary-sized motor vehicle which involves a steering system only for the front wheels, by modifying the present arrangement to an arrangement in which the power cylinder 13 at the rear of the vehicle is removed from the present arrangement.

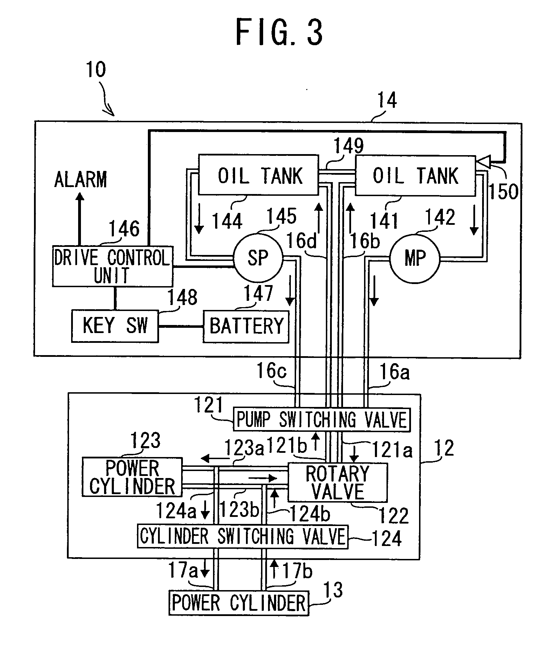

Moreover, in the embodiment shown in Fig. 2, while the pressure detecting switch 143 is employed as abnormality detection means for the main circuit, it is also allowed as shown in Fig. 3 to provide an oil-amount detecting switch 150 for detecting the amount of oil in the oil tank 141. Thus, when an oil leakage happens due to the damage on the main feed passage 16a and the like, the oil leakage is indirectly detected, and the sub-pump 145 can be immediately changed to a driving mode.

Since the arrangement in Fig. 3 is almost the same as that in Fig. 2 except for the oil-amount detecting switch 150, descriptions for the same elements are omitted by providing them with the same reference numerals.

The present invention is applicable to a steering assist system for a vehicle such as a tractor which tows a trailer, an auto-truck, and the like.

## Claims

1. A power steering system for a vehicle wherein a steering assist system is supplied with oil in an oil tank by use of a main pump that is engine driven, and steering assist for a steering wheel of the vehicle is thus effected by use of the oil thus supplied, the power steering system comprising:
a sub-pump that supplies the steering assist system with the oil in the oil tank by use of a battery drive;
abnormality detecting means for detecting an abnormality in an oil supply of the main pump; and
sub-pump drive control means for activating the sub-pump only when the abnormality detecting means detects the abnormality.

2. The power steering system for a vehicle according to claim 1, wherein the abnormality detecting means detects the abnormality based on an oil pressure generated by or the amount of oil flow of the oil supplied.

3. The power steering system for a vehicle according to claim 1, wherein the abnormality detecting means detects the abnormality based on the amount of oil in the oil tank.
